# DEMANDE DE BREVET EUROPEEN

(11) **EP 2 239 783 A1**
(43) Date de publication de la demande: **13.10.2010**
(21) Numéro de dépôt: 10159240.0
(22) Date de dépôt: 07.04.2010
(51) Int. Cl.: H01L 31/042, H01L 31/048, E04D 13/18

(54) **Kit de fixation pour panneau solaire sur une charpente**

(30) Priorité: 07.04.2009 FR 0952253
(71) Demandeur: Cofam Energy, 78550 Houdan (FR)
(72) Inventeur: Rensonnet, Michel, 78550, HOUDAN (FR)
(74) Mandataire: Maillet, Alain

(57) **Abrégé**

L'invention concerne un kit de fixation (108) pour panneau solaire (104) sur une charpente (202), le kit de fixation (108) comportant :
- un profilé (150) comportant une base (154) constituée des deux ailes coplanaires distantes l'une de l'autre et destinée à être fixée sur ladite charpente (202), un épaulement (122) destiné à servir de surface d'appui audit panneau solaire (104) et une glissière (116), et
- au moins un ensemble de fixation (112), chacun comportant des moyens d'emboîtement (204) destinés à s'emboîter dans ladite glissière (116) et des moyens de serrage (124, 126) destinés à presser le panneau solaire (104) contre ledit épaulement (202),
l'extrémité libre d'au moins une desdites ailes comportant une ailette (158) qui s'étend orthogonalement à l'aile considérée, et une digue (160) qui présente un angle d'environ 45° avec l'aile considérée.

## Description

La présente invention concerne un kit de fixation pour panneau solaire comportant au moins un profilé, un profilé mis en oeuvre dans un tel kit de fixation, ainsi qu'un procédé de fixation d'au moins un panneau solaire à l'aide d'au moins un tel kit de fixation.

Actuellement, les énergies renouvelables sont de plus en plus utilisées. En particulier, des panneaux solaires thermiques ou photovoltaïques sont fixés sur les toits des bâtiments.

Pour fixer un panneau solaire, un technicien doit retirer une partie des ardoises ou des tuiles du toit, puis fixer le panneau solaire aux voliges. A cette fin, le technicien utilise un kit de fixation comprenant une tôle d'étanchéité, des pattes en L, des barres de fixation et des éléments de visserie.

Le technicien fixe la tôle d'étanchéité sur les voliges à l'aide d'éléments de visserie, puis il fixe les barres de fixation sur la tôle à l'aide d'éléments de visserie. Les panneaux solaires sont ensuite placés sur les barres de fixation et sont maintenus en position par les pattes en L qui sont fixées sur les barres de fixation par des éléments de visserie.

Le temps de fixation d'un panneau solaire est donc long car il y a de nombreux éléments à mettre en place et de nombreux éléments de visserie à visser.

En outre les documents EP-A-905 795, FR-A-2 919 640, EP-A-1 777 357 et DE-U-20 2005 001 469 présentent des kits qui ne sont pas optimisés pour évacuer l'eau de pluie.

Un objet de la présente invention est de proposer un kit de fixation pour panneau solaire qui ne présente pas les inconvénients de l'art antérieur et qui en particulier permet une fixation rapide et facile du panneau solaire et qui facilite l'évacuation de l'eau.

A cet effet, est proposé un kit de fixation pour panneau solaire sur une charpente, le kit de fixation comportant :
- un profilé comportant une base constituée des deux ailes coplanaires distantes l'une de l'autre et destinée à être fixée sur ladite charpente, un épaulement destiné à servir de surface d'appui audit panneau solaire et une glissière, et
- au moins un ensemble de fixation, chacun comportant des moyens d'emboîtement destinés à s'emboîter dans ladite glissière et des moyens de serrage destinés à presser le panneau solaire contre ledit épaulement,
l'extrémité libre d'au moins une desdites ailes comportant une ailette qui s'étend orthogonalement à l'aile considérée, et une digue qui présente un angle d'environ 45° avec l'aile considérée.

Avantageusement, les moyens d'emboîtement comportent des moyens de blocage prévus pour bloquer lesdits moyens d'emboîtement dans la glissière.

Avantageusement, les moyens de blocage sont constitués d'au moins une bille montée sur ressort dans un alésage réalisé dans les moyens d'emboîtement.

Avantageusement, les moyens d'emboîtement sont constitués d'un coulisseau, et les moyens de serrage sont constitués d'une rondelle de serrage, et d'une vis prévue pour fixer ladite rondelle de serrage sur ledit coulisseau.

Avantageusement, le kit de fixation comporte un cache destiné à s'emboîter dans la tête de ladite vis.

Avantageusement, le kit de fixation comporte une cale destinée à venir entre la rondelle de serrage et le haut de glissière ou l'épaulement.

Avantageusement, la rondelle de serrage se présente sous la forme de deux cylindres ayant des axes parallèles et des diamètres différents.

L'invention propose également un profilé pour un kit de fixation pour panneau solaire sur une charpente, le profilé comportant :
- une base constituée des deux ailes coplanaires distantes l'une de l'autre et destinée à être fixée sur ladite charpente,
- un épaulement destiné à servir de surface d'appui audit panneau solaire et
- une glissière destinée à recevoir au moins un ensemble de fixation prévu pour presser le panneau solaire contre ledit épaulement,
   l'extrémité libre d'au moins une desdites ailes comportant une ailette qui s'étend orthogonalement à l'aile considérée, et une digue qui présente un angle d'environ 45° avec l'aile considérée.

L'invention concerne également un procédé de fixation de 'n' panneau(x) solaire(s), 'n' étant au moins égal à un, sur une charpente à l'aide de 'n+1' kits de fixation, le procédé de fixation comportant:
- une étape de fourniture de 'n-1' kit(s) de fixation dit kit de fixation centrale,
- une étape de fourniture de deux kits de fixation selon l'une des variantes précédentes, dits kits de fixation latérale,
pour chaque kit de fixation latérale
- une étape de fixation du profilé dudit kit de fixation latérale sur ladite charpente,
   pour chaque kit de fixation centrale
- une étape de fixation du profilé dudit kit de fixation centrale sur ladite charpente, le ou les profilés du ou des kits de fixation centrale étant disposés les uns à côté des autres entre les deux profilés des deux kits de fixation latérale, et
pour le ou chaque panneau solaire
- une étape de mise en place dudit ou de chaque panneau solaire sur les épaulements de deux kits de fixation voisins, et
- une étape de mise en place d'au moins un ensemble de fixation.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de dessus d'un toit supportant des kits de fixation selon l'invention,
la Fig. 2 est une coupe selon la droite II-II de la Fig. 1, et
la Fig. 3 est une coupe selon la ligne III-III de la Fig. 1.

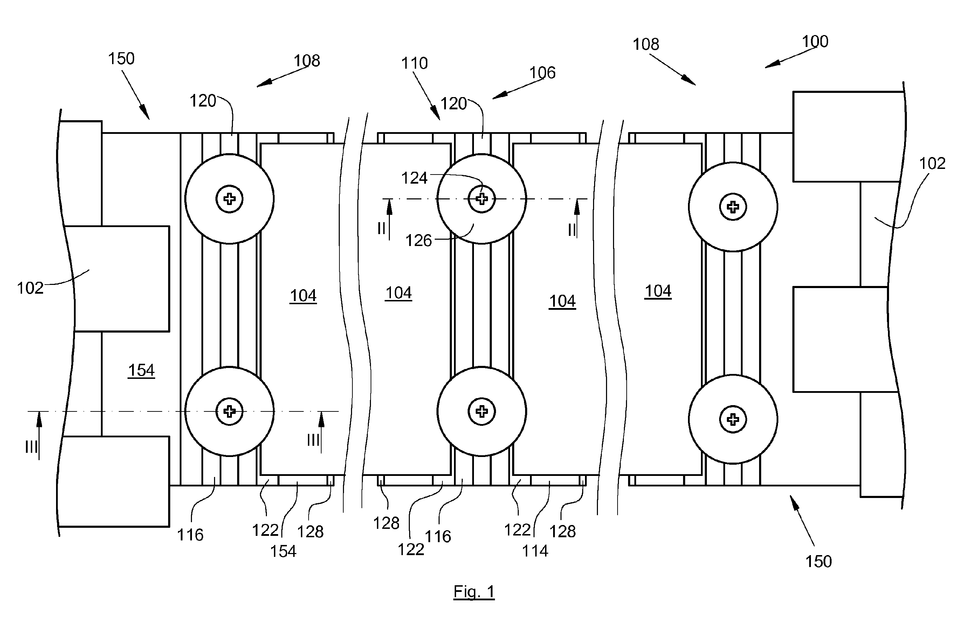

La Fig. 1 montre un toit 100 comportant des matériaux de couverture 102, comme par exemple des ardoises ou des tuiles.

Sur le toit 100 sont fixés de manière juxtaposée des panneaux solaires 104.

La fixation des panneaux solaires 104 nécessite la mise en place de kits de fixation centrale 106 et deux kits de fixation latérale 108.

D'une manière générale, pour 'n' panneaux solaires 104 juxtaposés, 'n' étant un entier supérieur ou égal à un, il y a 'n-1' kit(s) de fixation centrale 106 et deux kits de fixation latérale 108. En effet, entre deux panneaux solaires 104 juxtaposés, il y a un kit de fixation centrale 106 et pour chaque panneau solaire 104 d'extrémité, il y a un kit de fixation latérale 108.

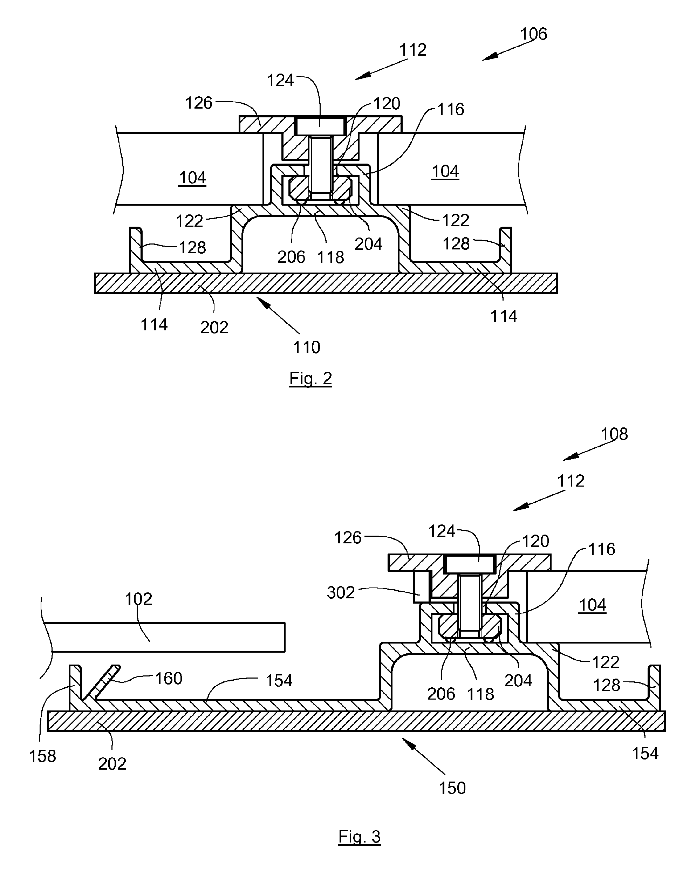

La Fig. 2 montre une coupe d'un kit de fixation centrale 106 et la Fig. 3 montre une coupe d'un kit de fixation latérale 108. Comme cela est expliqué ci-après, un kit de fixation centrale 106 peut être utilisé comme kit de fixation latérale 108 et inversement.

Le kit de fixation centrale 106 comporte un profilé 110 et au moins un ensemble de fixation 112 destiné à fixer les panneaux solaires 104 sur le profilé 110.

Le profilé 110 est symétrique et comporte une base rectiligne 114, une glissière 116 et pour chaque panneau solaire 104, un épaulement 122.

La base 114 est ici constituée des deux ailes coplanaires distantes l'une de l'autre et qui sont fixées sur la charpente 202 du toit 100 par des vis. En particulier, la base 114 est fixée sur les voliges 202 du toit 100.

La glissière 116 est ici constituée de deux rebords en L inversé qui se font face et sont à distance l'un de l'autre afin de définir un espace de passage 120.

Chaque épaulement 122 sert de surface d'appui à un panneau solaire 104 et il est réalisé par une face déportée 118 du profilé 110 qui est sensiblement parallèle à ladite base 114 et à distance de celle-ci. La distance entre l'épaulement 122 et la base 114 peut être augmentée pour améliorer la ventilation à l'arrière du panneau solaire 104 si cela est nécessaire.

Dans le mode de réalisation de l'invention représenté sur la Fig. 1, la face déportée 118 porte la glissière 116 et en constitue la paroi de fond.

L'ensemble de fixation 112 comprend des moyens d'emboîtement 204 prévus pour s'emboîter dans la glissière 116 et des moyens de serrage 124, 126 prévus pour presser chaque panneau solaire 104 contre l'épaulement 202 du profilé 110.

Dans le mode de réalisation de l'invention représenté sur les Figs., les moyens d'emboîtement 204 sont constitués d'un coulisseau 204, et les moyens de serrage 124, 126 sont constitués d'une rondelle de serrage 126 et d'une vis 124 prévue pour fixer ladite rondelle de serrage 126 sur ledit coulisseau 204.

Pour éviter que la tête de la vis 124 soit salie par des poussières, un cache amovible en plastique peut être emboîté dans ladite tête de vis.

La vis 124 peut être par exemple une vis CHC.

Le coulisseau 204 est inséré dans la glissière 116.

La rondelle de serrage 126 se présente sous la forme de deux cylindres ayant des axes parallèles et des diamètres différents. Le cylindre ayant le plus petit diamètre est positionné en vis à vis des rebords en L 116 et le cylindre ayant le plus grand diamètre vient en appui sur les panneaux solaires 104.

La vis 124 traverse la rondelle de serrage 126 et se visse dans un trou fileté du coulisseau 204 en traversant l'espace de passage 120.

Chaque panneau solaire 104 est ainsi pris en sandwich entre un épaulement 122 et la rondelle de serrage 126. Pour fixer au mieux chaque panneau solaire 104, il est préférable d'utiliser au moins deux ensembles de fixation 112 répartis le long du profilé 110. La hauteur du cylindre de petit diamètre est telle que, après serrage de la vis 124, le panneau solaire 104 est effectivement serré entre l'épaulement 122 et le cylindre de plus grand diamètre.

Pour immobiliser le coulisseau 204, et d'une manière plus générale les moyens d'emboîtement 204 dans la glissière 116, ils sont munis de moyens de blocage 206 qui les bloquent dans la glissière 116. Dans le mode de réalisation de l'invention présenté sur la Fig. 1, les moyens de blocage 206 sont constitués d'au moins une bille montée sur ressort dans un alésage réalisé à cet effet dans le coulisseau 204. La mise en place du coulisseau 204 dans la glissière 116 est réalisée par enfoncement de la ou chaque bille dans l'alésage correspondant par compression du ressort. Lorsque le coulisseau 204 est inséré dans la glissière 116, chaque ressort repousse la bille correspondante qui vient appuyer contre la paroi déportée 118 de la glissière 116 et plaquer le coulisseau 204 contre la paroi opposée, à savoir ici les rebords en L 116. L'immobilisation du coulisseau 204 facilite la fixation des panneaux solaires 104 car le profilé 110 est en pente sur le toit 100 et sans ces moyens de mise en appui, chaque coulisseau 204 aurait tendance à descendre le long de la glissière 116.

Chaque ou au moins l'une des ailes de la base 114 comprend, à son extrémité libre, une ailette 128 qui s'étend orthogonalement à l'aile considérée et sur toute la longueur de celle-ci. Chaque ailette 128 s'étend vers l'extérieur du toit 100. Chaque ailette 128 forme ainsi avec l'aile associée, une gouttière qui permet l'écoulement de l'eau jusqu'à la gouttière du toit 100.

Le kit de fixation centrale 106 comporte ainsi un nombre réduit d'éléments et est facile et rapide à mettre en oeuvre.

La Fig. 3 montre le kit de fixation latérale 108 dont la structure générale est identique au kit de fixation centrale 106. Les éléments communs aux deux kits 106 et 108 portent les mêmes références.

Le profilé 150 du kit de fixation latérale 108 présente une base 154 constituée des deux ailes coplanaires distantes l'une de l'autre et qui sont fixées sur les voliges 202 par des vis. L'une des ailes est destinée à venir sous le panneau solaire 104 et l'autre aile est destinée à venir sous les matériaux de couverture 102.

Le kit de fixation centrale 106 peut également être utilisé comme kit de fixation latérale 108 si les extrémités libres des matériaux de couverture 102 arrivent suffisamment près du profilé 110 pour empêcher, même en cas de vent, que l'eau puisse s'écouler par-dessus l'ailette 128 de l'aile disposée sous les matériaux de couverture 102. Inversement, le kit de fixation latérale 108 peut être utilisé comme kit de fixation centrale 106.

Pour assurer que, quelque soit la configuration des matériaux de couverture 102, de l'eau ne puisse pas s'infiltrer entre lesdits matériaux de couverture 102 et l'aile du kit de fixation latérale 108, ladite aile présente une largeur suffisamment grande pour que l'extrémité de cette aile s'enfonce suffisamment sous les matériaux de couverture 102.

Selon un mode de réalisation particulier de l'invention, l'aile la moins large présente une largeur de l'ordre de 25 mm et l'aile la plus large présente une largeur de l'ordre de 100 mm.

Pour éviter que de l'eau s'écoule par l'extrémité de l'aile de la base disposée sous les matériaux de couverture 102, une ailette 158 est disposée à l'extrémité de ladite base. L'ailette 158 s'étend orthogonalement à ladite aile et sur toute la longueur de celle-ci.

Pour repousser l'eau qui s'écoule vers l'extrémité libre de l'aile de la base disposée sous les matériaux de couverture 102 dans une direction opposée, une digue 160 est disposée à l'extrémité de ladite aile. L'eau reflue alors dans la direction opposée à sa direction d'arrivée. Cette digue 160 peut être en supplément ou en remplacement de l'ailette 158. La digue 160 présente un angle d'environ 45° avec l'aile de la base 154. Une telle digue peut être également mise en place à l'extrémité de l'autre aile.

Pour assurer que lors du serrage de la vis 124, la rondelle de serrage 126 ne se positionne pas en biais, une cale 302 est placée du côté où il n'y a pas de panneau solaire 104 entre la rondelle de serrage 126 et le haut de la glissière 116 ou l'épaulement 122.

Dans le mode de réalisation de l'invention présenté sur la Fig. 1, il y a une seule ligne de panneaux solaires 104. La longueur de chaque profilé 110, 150 est alors sensiblement égale à la longueur des panneaux solaires 104. Mais dans le cas où il y a plusieurs lignes de panneaux solaires 104 qui sont disposées les unes au-dessus des autres dans la pente du toit 100, la longueur de chaque profilé 110, 150 est alors de préférence sensiblement égale à la somme des longueurs des panneaux solaires 104 qui sont disposés les uns au-dessus des autres.

Un procédé de fixation de 'n' panneau(x) solaire(s) 104 ('n' étant au moins égal à un) à l'aide de 'n+1' kits de fixation comporte:
- une étape de fourniture de 'n-1' kit(s) de fixation 106 dit kit de fixation centrale,
- une étape de fourniture de deux kits de fixation 108 dits kits de fixation latérale,
pour chaque kit de fixation latérale 108
- une étape de fixation du profilé 150 dudit kit de fixation latérale 108 sur la charpente 202,
pour chaque kit de fixation centrale 106
- une étape de fixation du profilé 110 dudit kit de fixation centrale 106 sur la charpente 202, le ou les profilés 110 du ou des kits de fixation centrale 106 étant disposés les uns à côté des autres entre les deux profilés 150 des deux kits de fixation latérale 108, et
pour chaque panneau solaire 104
- une étape de mise en place dudit panneau solaire 104 sur les épaulements 122 de deux kits de fixation 106, 108 voisins, et
- une étape de mise en place d'au moins un ensemble de fixation 112.

Dans le mode de réalisation de l'invention présenté sur les Figs., l'étape de mise en place d'un ensemble de fixation 112 consiste en:
- une étape de mise en place du coulisseau 204 dans la glissière 116 du profilé 110, 150 correspondant,
- une étape de mise en place de la rondelle de serrage 126 sur le ou les panneaux solaires 104, et
- une étape de serrage de la vis 124.

A la fin de la fixation des panneaux solaires 104, une étanchéité avec les matériaux de couverture 102 est mise en place autour desdits panneaux solaires 104.

Toujours à des fins d'étanchéité, il est possible de placer entre la charpente 202 et les profilés 110 et 150, un écran de sous-toiture souple spécial panneaux solaires, ou un bac en acier ou en aluminium.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas où les profilés suivent la pente du toit, c'est-à-dire entre le faîte du toit et la gouttière, mais l'invention s'applique de la même manière si les profilés sont disposés orthogonalement par rapport à la pente du toit, c'est-à-dire sensiblement horizontalement.

Par exemple, l'invention a été plus particulièrement décrite dans le cas d'une charpente en bois mais elle s'applique de la même manière à tous types de charpente, comme par exemple, une charpente métallique industrielle.

## Revendications

1. Kit de fixation (108) pour panneau solaire (104) sur une charpente (202), le kit de fixation (108) comportant :
- un profilé (150) comportant une base (154) constituée des deux ailes coplanaires distantes l'une de l'autre et destinée à être fixée sur ladite charpente (202), un épaulement (122) destiné à servir de surface d'appui audit panneau solaire (104) et une glissière (116), et
- au moins un ensemble de fixation (112), chacun comportant des moyens d'emboîtement (204) destinés à s'emboîter dans ladite glissière (116) et des moyens de serrage (124, 126) destinés à presser le panneau solaire (104) contre ledit épaulement (202),
l'extrémité libre d'au moins une desdites ailes comportant une ailette (158) qui s'étend orthogonalement à l'aile considérée, et une digue (160) qui présente un angle d'environ 45° avec l'aile considérée.

2. Kit de fixation (108) selon la revendication 1, **caractérisé en ce que** les moyens d'emboîtement (204) comportent des moyens de blocage (206) prévus pour bloquer lesdits moyens d'emboîtement (204) dans la glissière (116).

3. Kit de fixation (108) selon la revendication 2, **caractérisé en ce que** les moyens de blocage (206) sont constitués d'au moins une bille montée sur ressort dans un alésage réalisé dans les moyens d'emboîtement (204).

4. Kit de fixation (108) selon l'une des revendications 1 à 3, **caractérisé en ce que** les moyens d'emboîtement (204) sont constitués d'un coulisseau (204), et **en ce que** les moyens de serrage (124, 126) sont constitués d'une rondelle de serrage (126), et d'une vis (124) prévue pour fixer ladite rondelle de serrage (126) sur ledit coulisseau (204).

5. Kit de fixation (108) selon la revendication 4, **caractérisé en ce qu'**il comporte un cache destiné à s'emboîter dans la tête de ladite vis (124).

6. Kit de fixation (108) selon l'une des revendications 4 ou 5, **caractérisé en ce qu'**il comporte une cale (302) destinée à venir entre la rondelle de serrage (126) et le haut de glissière (116) ou l'épaulement (122).

7. Kit de fixation (108) selon l'une des revendications 4 à 6, **caractérisé en ce que** la rondelle de serrage (126) se présente sous la forme de deux cylindres ayant des axes parallèles et des diamètres différents.

8. Profilé (150) pour un kit de fixation (108) pour panneau solaire (104) sur une charpente (202), le profilé (150) comportant :
- une base (154) constituée des deux ailes coplanaires distantes l'une de l'autre et destinée à être fixée sur ladite charpente (202),
- un épaulement (122) destiné à servir de surface d'appui audit panneau solaire (104) et
- une glissière (116) destinée à recevoir au moins un ensemble de fixation (112) prévu pour presser le panneau solaire (104) contre ledit épaulement (202),
l'extrémité libre d'au moins une desdites ailes comportant une ailette (158) qui s'étend orthogonalement à l'aile considérée, et une digue (160) qui présente un angle d'environ 45° avec l'aile considérée.

9. Procédé de fixation de 'n' panneau(x) solaire(s) (104), 'n' étant au moins égal à un, sur une charpente (202) à l'aide de 'n+1' kits de fixation (106, 108), le procédé de fixation comportant:
- une étape de fourniture de 'n-1' kit(s) de fixation (106) dit kit de fixation centrale,
- une étape de fourniture de deux kits de fixation (108) selon l'une des revendications 1 à 7 dits kits de fixation latérale,
pour chaque kit de fixation latérale (108)
- une étape de fixation du profilé (150) dudit kit de fixation latérale (108) sur ladite charpente (202),
pour chaque kit de fixation centrale (106)
- une étape de fixation du profilé (110) dudit kit de fixation centrale (106) sur ladite charpente (202), le ou les profilés (110) du ou des kits de fixation centrale (106) étant disposés les uns à côté des autres entre les deux profilés (150) des deux kits de fixation latérale (108), et
pour le ou chaque panneau solaire (104)
- une étape de mise en place dudit ou de chaque panneau solaire (104) sur les épaulements (122) de deux kits de fixation (106, 108) voisins, et
- une étape de mise en place d'au moins un ensemble de fixation (112).
